# EUROPEAN PATENT APPLICATION

(11) **EP 3 865 198 A2**
(43) Date of publication of application: **18.08.2021**
(21) Application number: 21153279.1
(22) Date of filing: 25.01.2021
(51) Int. Cl.: B01D 39/16, B01D 39/08, A41D 13/11, A62B 23/02

(54) **MULTIFUNCTIONAL CLOTH AND MULTIFUNCTIONAL MASK**

(30) Priority: 11.02.2020 TW 109104137
(71) Applicant: Amber Nanotech Co., Ltd., Zhubei City, Hsinchu County 302 (TW)
(72) Inventor: LAI, Tai-Lung, 302 Zhubei City (TW); LIN, Min-Pang, 302 Zhubei City (TW)
(74) Representative: Latscha Schöllhorn Partner AG

(57) **Abstract**

The present invention is related to multifunctional cloth and multifunctional mask, which are antibacterial and antiviral and can block PM2.5 particles. The multifunctional cloth includes at least one polytetrafluoroethylene (PTFE) layer and at least one active layer. The active layer includes a carrier and a nanocomposite material formed on the carrier, and the nanocomposite material is antibacterial, antiviral and can decompose organics. The multifunctional mask includes at least one PTFE layer, at least one active layer and a skin-friendly layer. The multifunctional cloth and the multifunctional mask can further include a water-repellent layer.

## Description

### CROSS-REFERENCE TO RELATED APPLICATIONS

The present invention claims the benefit of priority to Patent Application No. 109104137, filed in Taiwan on February 11, 2020, which is hereby incorporated by reference in its entirety.

### FIELD OF THE INVENTION

The present invention relates to multifunctional cloth and multifunctional masks, in particularly, to multifunctional cloth and multifunctional masks that can provide good air permeability, protect against bacteria and viruses, and block PM2.5 particles.

### BACKGROUND

There are a variety of textiles, including plant fibers, animal fibers, synthetic fibers, etc., which have numerous properties so that they are applicable in various environment. However, current textiles are not antiviral, and they can't prevent PM2.5 particles from penetration. Nonwoven fabrics are cheap and in widespread uses as materials for construction, medical equipment, household goods, etc. Nonwoven fabrics are air permeable, soft, easy to tailor, folding-endurable, insulating, rainproof, leakproof, tough, antibacterial, hygienic, and good to absorb water, but they do not protect against viruses/bacteria and PM 2.5 particles at the same time.

Masks such as mouth masks, nose masks and face masks are fundamentally used to block pollutants from entering into human bodies. Mouth masks, nose masks and face masks are different from one another in areas of the face covered, but they have substantially the same basic structures. Thus, only the mouth masks will be illustrated below. There are several mouth masks currently available, including activated carbon masks, surgical masks, cotton masks, paper masks, PM2.5 masks, N95 masks and antiviral/antibacterial masks. None of the aforementioned mask can simultaneously provide protection against viruses, bacteria, sewage and PM2.5 particles while maintaining good air permeability and comfort for the wearer.

It is in this context that various embodiments of the present invention arise.

### SUMMARY

The object of the present invention is to provide structures of multifunctional cloth and multifunctional masks capable of protecting against bacteria, viruses and PM2.5 particles. The present invention employs a laminated structure including a polytetrafluoroethylene (PTFE) membrane and an active layer including a nanocomposite material. The laminated structure has high air permeability and ability to filter PM2.5 particles due to the material properties of the PTFE membrane. At the same time, the laminated structure can protect against viruses/bacteria and decompose organic pollutants due to the material properties of the active layer including nanocomposite materials.

According to one aspect, the present invention provides multifunctional cloth including at least one PTFE layer and at least one active layer. The PTFE layer having a first side and an opposite second side is composed of polytetrafluoroethylene. The active layer is located under the first side of the PTFE layer. The active layer includes a carrier and a nanocomposite material formed on the carrier. The nanocomposite material can be used to protect against viruses/bacteria and decompose organics.

Either or both of the PTFE layer and the active layer may have a serrated or wrinkled surface. Alternatively, the PTFE layer and the active layer may have flat surfaces. In some embodiments, there are one or more additional PTFE layers and/or one or more active layers outside the aforementioned PTFE layer and active layer.

The carrier of the active layer may be woven fabric. Alternatively, the carrier of the active layer may be nonwoven fabric. The nanocomposite material in the active layer may include, for example, silver nanoparticles and titanium dioxide nanoparticles.

The multifunctional cloth of the present invention may further include a water-repellent layer, which is composed of water-repellent cloth. In one embodiment, the water-repellent layer is located on the second side of the PTFE layer. Since the second side of the PTFE layer is opposite the first side, the PTFE layer is located between the water-repellent layer and the active layer. In another embodiment, the water-repellent layer is located under the first side of the PTFE layer such that the active layer is located between the water-repellent layer and the PTFE layer.

According to another aspect, the present invention provides a multifunctional mask, including the aforementioned multifunctional cloth and a skin-friendly layer, which can be used to adsorb sebum or sweat. In one embodiment, the skin-friendly layer is located under the first side of the PTFE layer such that the active layer is located between the skin-friendly layer and the PTFE layer. In another embodiment, the skin-friendly layer is located on the second side of the PTFE layer such that the PTFE layer is located between the skin-friendly layer and the active layer.

These and other aspects are described further below with reference to the drawings.

### BRIEF DESCRIPTION OF THE DRAWINGS

FIG. 1 shows a cross-sectional schematic view of multifunctional cloth according to one embodiment of the present invention.
FIG. 2a-2c shows cross-sectional schematic views of multifunctional cloth according to embodiments of the present invention.
FIG. 3 shows a cross-sectional schematic view of multifunctional cloth according to one embodiment of the present invention.
FIG. 4 shows a cross-sectional schematic view of a multifunctional mask according to one embodiment of the present invention.
FIG. 5 shows a cross-sectional schematic view of a multifunctional mask according to one embodiment of the present invention.
FIG. 6 shows a cross-sectional schematic view of a multifunctional mask according to one embodiment of the present invention.
FIG. 7 shows a schematic top view of part of multifunctional cloth according to one embodiment of the present invention.

In the drawings, similar or the same components are designated by the same numerals.

### DETAILED DESCRIPTION

The objects, advantages and features of the present invention will become apparent from the following detailed descriptions in conjunction with the accompanying drawings.

In the following description, numerous specific details are set forth to provide a thorough understanding of the presented embodiments. While the present invention will be described in conjunction with the specific embodiments, it will be understood that the specific embodiments are not intended to limit the disclosed embodiments. Terms such as "on", "above", "below", "top", "bottom", "over", "under" and so forth will be used in the following description. However, these relative terms are used for ease of understanding and are not used in a limiting sense. Furthermore, the various embodiments shown in the drawings are illustrative, and are not necessarily drawn to scale.

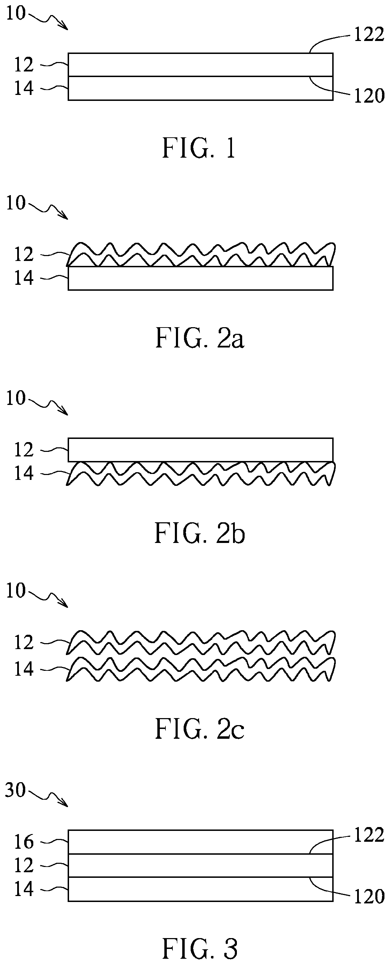

According to one embodiment of the present invention, FIG. 1 shows a cross-sectional schematic view of multifunctional cloth 10, which can provide high air permeability, protect against viruses/bacteria, decompose organics and prevent PM2.5 particles from penetration. The multifunctional cloth 10 includes a PTFE layer 12 and an active layer 14. The active layer 14 is located at one side of the PTFE layer 12. In the embodiment shown in FIG. 1, the active layer 14 is located under a first side 120 of the PTFE layer 12.

Polytetrafluoroethylene is used as raw material for producing the PTFE layer 12, which is a microporous membrane formed by particular processing, such as rolling, extrusion and biaxial stretching, by way of the pore-forming property of PTFE. The PTFE layer has a fibril-like microporous structure, having porosity of about 80% or more with about one billion or more micro-pores per square centimeter, and pore size ranging from about 0.02 µm to 3 µm in diameter. The microporous PTFE membrane has a microporous network (such as spider-web-like) structure, and the micro-pores are formed between microfibers. The microfibers are aligned substantially parallel to the stretched direction of the PTFE membrane. Many microfiber bundles are connected and wound together to form nodes at connection points of the bundles. The PTFE membrane is an asymmetric membrane, in which the pore size on the front surface is different from that on the back surface. The cross-sectional pore size of the PTFE membrane is larger than the pore size of the surface. Besides, the pore sizes in the longitudinal and transverse directions are essentially different. For example, the pore size in the longitudinal direction can be larger than that in the transverse direction. The PTFE membrane has a three-dimension (3D) network structure, in which the pores are interconnected into a three-dimensional pore network to form winding and interlaced pore channels, thus forming dense channels inside the PTFE membrane.

In one example, there are more than one billion micro-pores per square centimeter at the surface of the PTFE layer 12. The diameter of each micro-pore (0.1 µm-0.5 µm) is about several hundred times smaller than that of water droplets (20 µm-100 µm) and about one thousand times larger than that of water vapor molecule (0.0003 µm-0.0004 µm). Thus, water vapor can pass through the PTFE layer, while water droplets cannot. The present invention uses the PTFE layer as part of the internal structure of the multifunctional cloth, which can not only block PM2.5 pollutants but also achieve excellent air permeability.

The active layer 14 includes a carrier and a nanocomposite material formed on the carrier. The carrier in the active layer 14 may be a nonwoven fabric. Alternatively, the carrier in the active layer 14 may be a woven fabric that is more resistant to washing. In addition, the nanocomposite material in the active layer 14 can be used for protection against bacteria and viruses as well as decomposition of organic pollutants. In one example, using silver nanoparticle and titanium dioxide nanoparticle sol-gel, a nanocomposite material including silver nanoparticles and titanium dioxide nanoparticles can be attached to fabrics by spray-coating, dip-coating or other suitable methods, thus obtaining the active layer 14 of the present invention. For example, the silver nanoparticles can have particle size of between about 0.1 nm and about 60 nm, and the titanium dioxide nanoparticles can have particle size of between about 0.1 nm and about 60 nm. The nanocomposite material formed on the carrier can have a thickness of, for example, less than 1 mm. The nanocomposite material in the active layer 14 can react with bacteria and viruses to reduce their activity or even kill them. The nanocomposite material can also react with organics (e.g., organic pollutants) to decompose them. By way of example, one nanocomposite material is "Advanced Nano Composite Material TTA Series" (for example, JM-TTA01), which is commercially available from Jiouzao Industrial Co. Ltd., Taiwan.

In one embodiment, the surfaces of both the PTFE layer 12 and the active layer 14 may be flat, as shown in FIG. 1. In other embodiments, the surface of either or both the PTFE layer 12 and the active layer 14 may be serrated or wrinkled so as to increase the surface area of the PTFE layer and/or the active layer, which provides better effect on blocking, resistance or decomposition of bacteria, viruses, air pollutants, etc. For example, one of the PTFE layer 12 and the active layer 14 may be serrated or wrinkled, as shown in FIGS. 2a and 2b. Alternatively, the surfaces of both the PTFE layer 12 and the active layer 14 are serrated or wrinkled, as shown in FIG. 2c.

The multifunctional cloth of the present invention may include a plurality of PTFE layers, a plurality of active layers, or a combination thereof, as needed. For example, in some embodiments, in addition to the PTFE layer 12 and the active layer 14 of FIG. 1, one or more additional PTFE layers and/or one or more additional active layers may be added. These additional layers can be combined in any proper arrangement.

The multifunctional cloth of the present invention may further include a water-repellent layer. As shown in FIG. 3, multifunctional cloth 30 includes a water-repellent layer 16, a PTFE layer 12 and an active layer 14. The water-repellent layer 16 is composed of water-repellent cloth. In the embodiment shown in FIG. 3, the active layer 14 is located under the first side 120 of the PTFE layer 12, and the water-repellent layer 16 is located on the second side 122 of the PTFE layer 12 (the second side 122 is the opposite side of the first side 120). The PTFE layer 12 is positioned between the water-repellent layer 16 and the active layer 14. In other embodiments, the water-repellent layer may be located under the first side of the PTFE layer such that the active layer is located between the water-repellent layer and the PTFE layer. As described above, the surface of either or both the PTFE layer 12 and the active layer 14 may be serrated or wrinkled. In other embodiments, the multifunctional cloth 30 may include a plurality of PTFE layers, a plurality of active layers or a combination thereof. These layers can be combined in any proper arrangement.

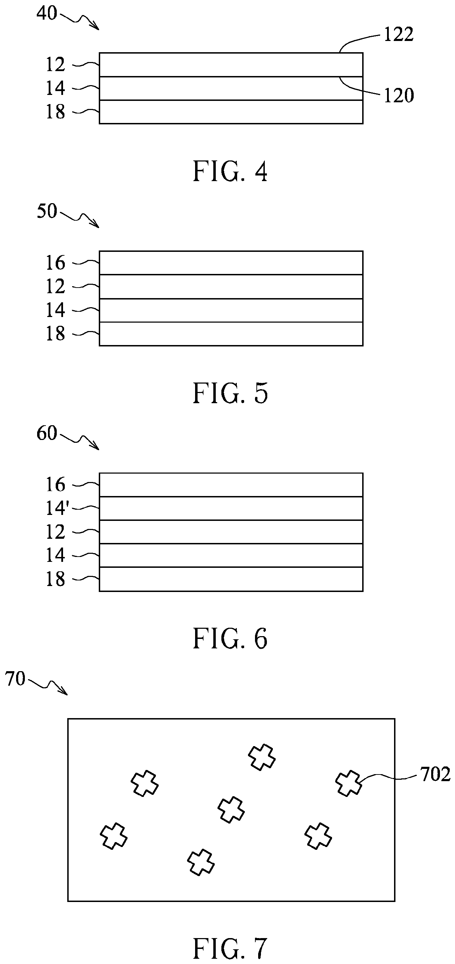

According to another aspect, the aforementioned multifunctional cloth is combined with a skin-friendly layer to form a multifunctional mask, which can be used as a mouth mask, a nose mask and a face mask, but not limited thereto. When the multifunctional mask is worn by a user, the user's skin contacts with the skin-friendly layer, which can adsorb sebum or sweat to achieve wearing comfortability. As shown in FIG. 4, the multifunctional mask 40 includes a PTFE layer 12, an active layer 14 and a skin-friendly layer 18. In the embodiment shown in FIG. 4, the skin-friendly layer 18 is located under the first side 120 of the PTFE layer 12 such that the active layer 14 is located between the skin-friendly layer 18 and the PTFE layer 12. In another embodiment, the skin-friendly layer can be located on the second side of the PTFE layer such that the PTFE layer is located between the skin-friendly layer and the active layer. As described above, the surface of either or both the PTFE layer 12 and the active layer 14 may be serrated or wrinkled. In other embodiments, the multifunctional mask 40 may include a plurality of PTFE layers, a plurality of active layers or a combination thereof. These layers can be combined in any proper arrangement.

The multifunctional mask of the present invention may further include a water-repellent layer. As shown in FIG. 5, a multifunctional mask 50 includes a water-repellent layer 16, a PTFE layer 12, an active layer 14 and a skin-friendly layer 18. In the embodiment shown in FIG. 5, the PTFE layer 12 is located between the water-repellent layer 16 and the active layer 14, and the active layer 14 is located between the PTFE layer 12 and the skin-friendly layer 18. In other embodiments, the positions of the PTFE layer and the active layer in FIG. 5 can be interchanged such that the active layer is located between the water repellent layer and the PTFE layer, and the PTFE layer is located between the active layer and the skin-friendly layer. The surface of either or both the PTFE layer 12 and the active layer 14 may be serrated or wrinkled. In other embodiments, the multifunctional mask 50 may include a plurality of PTFE layers, a plurality of active layers or a combination thereof. These layers may be combined in any proper arrangement.

In one embodiment, a multifunctional mask 60 includes a water repellent layer 16, a PTFE layer 12, two active layers 14 and 14 ' and a skin-friendly layer 18, as shown in FIG. 6. The multifunctional mask 60 has two active layers 14 and 14 ', which cover both sides of the PTFE layer 12, to further enhance protection against viruses and bacteria as well as decomposition of organics.

The foregoing describes several exemplary structures of the multifunctional cloth and the multifunctional mask, which can be manufactured using various suitable techniques. In one example, high frequency welding technique can be used to join the layers. A high frequency welding machine can include a plurality of point heat sources, which may be arranged in a matrix pattern or in any other suitable pattern. The multiple layers required are stacked on top of each other, and then placed under the high frequency welding machine. The high frequency welding machine is turned on to heat up the point heat sources. The point heat sources can weld and join the layers at a plurality of positions corresponding to them, obtaining the multifunctional cloth or multifunctional masks of the present invention. As shown in FIG. 7, the layers can be joined by cross-shaped point heat sources to produce the multifunctional cloth 70, which thus has cross-shaped joints 702. The point heat sources can also have other shapes, such as linear shape, circular shape and square shape. In other examples, the layers may be joined by machine or hand stitching, adhesive bonding, or other suitable techniques.

The active layer of the present invention includes a nanocomposite material. According to one embodiment, the nanocomposite material includes silver nanoparticles and titanium dioxide nanoparticles. The silver nanoparticle itself has excellent antiviral and antibacterial effects, while titanium dioxide, which is a photo-catalyst, has high activity efficient for oxidation and decomposition of organic pollutants under irradiation of fluorescent lamps, sunlight or ultraviolet lamps. Silver nanoparticles can react with viruses and bacteria. Even if there is biofilm residual covering the surface of the silver nanoparticles, titanium dioxide can decompose and clean the biofilm residual such that the silver nanoparticles can play a role in protecting against viruses and bacteria once again. In addition, titanium dioxide nanoparticles are very hydrophilic, so they will not fail upon being wetted by saliva. Instead, the titanium dioxide nanoparticles can decompose water into hydroxide radical (OH·). The hydroxide radical (OH·) with high oxidizing power can oxidize and decompose organics as well as deactivating viruses and bacteria.

The active layer in the present invention includes a nanocomposite material, which is more effective than a non-nano-sized composite material. For example, silver nanoparticles have much better antiviral and antibacterial effect than that of non-nano-sized silver particles, and titanium dioxide nanoparticles have much greater activity than that of non-nano-sized titanium dioxide particles.

When a PTFE membrane with small pore sizes is combined with an active layer with a nanocomposite material, it is found that the effect on protection against bacteria, viruses and PM2.5 particles is surprisingly excellent, while providing excellent air permeability. It is assumed that the PTFE membrane with micro-pores not only blocks liquid water droplets and PM2.5 particles but also slows down the penetration rate of bacteria, viruses, microorganisms, etc., such that the contact time is sufficient for the nanocomposite material in the active layer to react with bacteria, viruses and microorganisms to reduce or eliminate their activity. Therefore, the multifunctional cloth and the multifunctional masks of the present invention have very excellent effects. However, it should be recognized that the mechanism is not limited thereto.

Although the foregoing embodiments have been described in some detail for purposes of clarity of understanding, it will be apparent that certain changes and modifications may be practiced within the scope of the appended claims. It should be noted that there are many alternative ways of implementing the methods and structures of the present embodiments. Accordingly, the present embodiments are to be considered as illustrative and not restrictive, and the present invention is not to be limited to the details given herein.

### LIST OF REFERENCE NUMERALS

- 10: multifunctional cloth
- 12: polytetrafluoroethylene (PTFE) layer
- 14, 14': active layer
- 16: water-repellent layer
- 18: skin-friendly layer
- 30: multifunctional cloth
- 40: multifunctional mask
- 50: multifunctional mask
- 60: multifunctional mask
- 70: multifunctional cloth
- 120: first side
- 122: second side
- 702: cross-shaped joint

## Claims

1. A multifunctional cloth (10), including:
a PTFE layer (12), composed of polytetrafluoroethylene, the PTFE layer (12) having a first side (120) and a second side (122) opposite to the first side (120); and
an active layer (14), located under the first side (120) of the PTFE layer (12),
wherein the active layer (14) includes a carrier and a nanocomposite material formed on the carrier, the nanocomposite material is configured for protection against viruses and bacteria and decomposition of organics.

2. The multifunctional cloth of claim 1, wherein the nanocomposite material includes silver nanoparticles and titanium dioxide nanoparticles.

3. The multifunctional cloth of claim 1 or 2, wherein the PTFE layer (12) and/or the active layer (14) has a serrated or wrinkled surface.

4. The multifunctional cloth of claim 1 or 2, wherein the PTFE layer (12) and the active layer (14) have flat surfaces.

5. The multifunctional cloth of any one of claims 1-4, wherein the carrier of the active layer (14) is woven fabric or nonwoven fabric.

6. The multifunctional cloth of any one of claims 1-5, further including:
a water-repellent layer (16), composed of water-repellent cloth, the water-repellent layer (16) located on the second side (122) of the PTFE layer (12) such that the PTFE layer (12) is located between the water-repellent layer (16) and the active layer (14).

7. The multifunctional cloth of any one of claims 1-5, further including:
a water-repellent layer (16), composed of water-repellent cloth, the water-repellent layer (16) located under the first side (120) of the PTFE layer (12) such that the active layer (14) is located between the water-repellent layer (16) and the PTFE layer (12).

8. The multifunctional cloth of any one of claims 1-7, further including one or more additional PTFE layer and/or one or more additional active layer located outside the PTFE layer (12) and the active layer (14).

9. A multifunctional mask (40), including:
the multifunctional cloth (10) of any one of claims 1-6 and 8; and
a skin-friendly layer (18), located under the first side (120) of the PTFE layer (12) such that the active layer (14) is located between the skin-friendly layer (18) and the PTFE layer (12).

10. A multifunctional mask (40), including:
the multifunctional cloth (10) of any one of claims 1-5 and 7-8; and
a skin-friendly layer (18), located on the second side (122) of the PTFE layer (12) such that the PTFE layer (12) is located between the skin-friendly layer (18) and the active layer (14).
